# EUROPEAN PATENT APPLICATION

(11) **EP 4 485 047 A1**
(43) Date of publication of application: **01.01.2025**
(21) Application number: 24183835.8
(22) Date of filing: 21.06.2024
(51) Int. Cl.: G02B 30/40, G02B 30/60, G02B 5/12, G02B 5/124

(54) **IMAGING DEVICE**

(30) Priority: 29.06.2023 JP 2023106796
(71) Applicant: Alps Alpine Co., Ltd., Ota-ku, Tokyo 145-8501 (JP)
(72) Inventor: Yuza, Shingo, Iwaki-city, Fukushima (JP); Uchiyama, Ryu, Iwaki-city, Fukushima (JP)
(74) Representative: Schmitt-Nilson Schraud Waibel Wohlfrom Patentanwälte Partnerschaft mbB

(57) **Abstract**

An imaging device that is capable of causing a change in an aerial image, and can be reduced in size is provided. The imaging device includes, in a housing, a disk-shaped retro-reflection sheet in which a plurality of designs are formed at different positions, an LED light source configured to irradiate the retro-reflection sheet, a beam splitter, and a motor configured to rotate and move the retro-reflection sheet. The retro-reflection sheet is rotated and moved to enable switching of aerial images of the designs irradiated by the LED light source.

## Description

The present invention relates to an aerial imaging device having a function of displaying an image in the air by utilizing retro-reflection, and in particular, to an imaging device having a function of causing a change in an aerial image.

Aerial Imaging by Retro-Reflection (AIRR) utilizing retro-reflection has been known. For example, JP 2017-107165 discloses an imaging device using two retro-reflection members in order to make an image formed in the air observable in a wider angular range. JP 2022-150245 discloses an imaging device, in which a light source and a retro-reflection member are positioned such that light reflected by the retro-reflection member does not enter an observation range, in order that worsening of contrast and visibility may be inhibited.

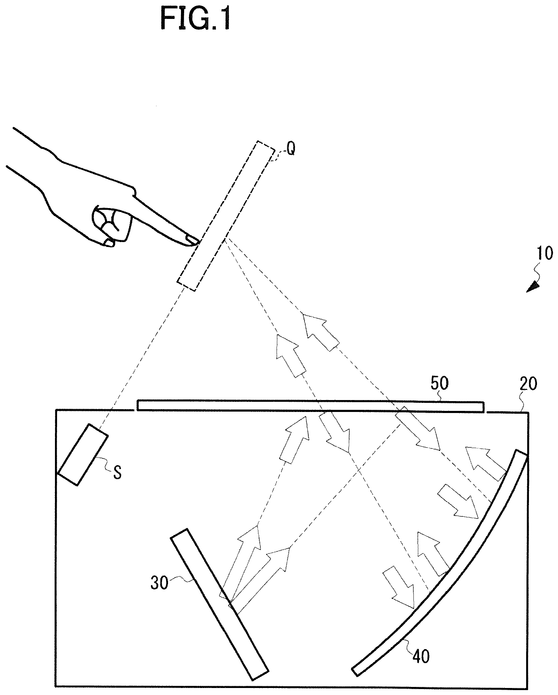

An aerial imaging device of the AIRR type uses a liquid crystal display (LCD) or a light emitting diode (LED) as a light source. FIG. 1 illustrates a schematic configuration of an imaging device using an LCD as a light source. An imaging device 10 includes an optical system inside a housing 20, the optical system including an LCD 30, a retro-reflection member 40, a beam splitter 50, and the like, and the imaging device is configured to display an aerial image Q of an image displayed on the LCD 30. The aerial image Q is, for example, an icon or the like for allowing a user to perform an input operation, and this operation is detected by a sensor S. Although the imaging device 10 can change the aerial image Q by changing the image displayed on the LCD 30, there is a problem that the size of the entire optical system is large due to the LCD 30 itself having a large size.

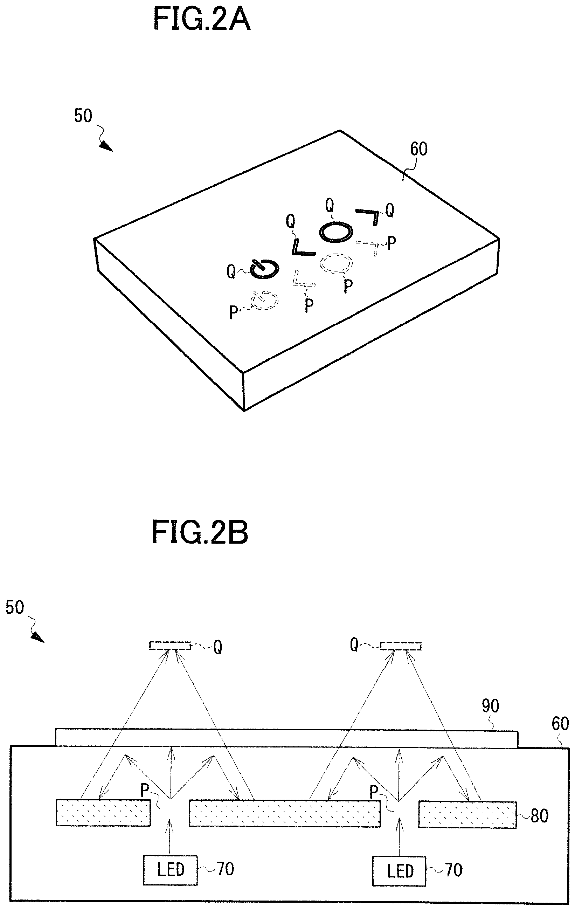

FIGS. 2A and 2B are diagrams illustrating a schematic configuration of an imaging device using an LED as a light source. FIG. 2A is a perspective view illustrating the entirety of the imaging device, and FIG. 2B is a schematic cross-sectional view. As illustrated in FIG. 2B, the imaging device 50 includes, for example, LEDs 70, a retro-reflection layer 80, and a beam splitter or a half mirror 90 inside a housing 60. The retro-reflection layer 80 has a design P that includes cutouts or openings for generating an original image of an aerial image Q.

Rays of light emitted from the LEDs 70 irradiate the retro-reflection layer 80, any rays of light that have passed through the design P are retro-reflected between the retro-reflection layer 80 and the beam splitter 90, and the aerial image Q of the design P is displayed above the housing 60. Although the imaging device 50 can be reduced in size as a whole because of using the LEDs 70, there is a problem that the letters or icons based on the design P are static, and therefore the aerial image Q is also static.

It is an object of the present invention to provide an imaging device that can enable a change of an aerial image and that can be reduced in size.

The invention relates to an imaging device according to the appended claims. Embodiments are disclosed in the dependent claims.

An imaging device according to an aspect of the present invention is capable of displaying an aerial image by utilizing retro-reflection, and includes:
a retro-reflection member in which a design including a cutout or an opening is formed;
a light source configured to irradiate the retro-reflection member from a back surface side;
an optical member that is situated above the retro-reflection member and through which retro-reflected light can be transmitted; and
a moving member configured to move the retro-reflection member,
wherein the imaging device causes a change in an aerial image of the design when the retro-reflection member is moved.

In an embodiment, a plurality of designs are formed in the retro-reflection member, and when the retro-reflection member is moved, an aerial image is switched to another aerial image.

In an embodiment, when the retro-reflection member is moved, the design moves in response, moving an aerial image.

In an embodiment, the retro-reflection member is installed such that the retro-reflection member is capable of rotating, and the moving member is configured to rotate the retro-reflection member, such that an aerial image of a design coinciding with a position irradiated by the light source is displayed.

In an embodiment, the retro-reflection member includes a belt-like retro-reflection sheet that is wound over a pair of rotating members, and the moving member is configured to move the retro-reflection sheet in a horizontal direction such that an aerial image of a design coinciding with a position irradiated by the light source is displayed.

In an embodiment, a plurality of retro-reflection sheets are wound in parallel over the pair of rotating members, and at least one design is formed in each of the plurality of retro-reflection sheets.

In an embodiment, the moving member drives the plurality of retro-reflection sheets separately.

In an embodiment, the imaging device further includes a diffuser between the light source and the retro-reflection member.

In an embodiment, the imaging device further includes a polarizer between the light source and the retro-reflection member.

According to aspects of the present invention, a retro-reflection member having a design including a cutout or an opening is irradiated by a light source from the back surface side, and the retro-reflection member is moved. This enables a change of the design to be irradiated by the light source, thereby enabling a change of an aerial image. In addition, since a light source such as an LED is used, the size of the imaging device can be reduced.
FIG. 1 is a view illustrating a schematic configuration of an existing aerial imaging device;
FIG. 2A is a view illustrating a schematic configuration of an existing aerial imaging device;
FIG. 2B is a view illustrating a schematic configuration of an existing aerial imaging device;
FIG. 3A is a perspective view illustrating an overall configuration of an imaging device according to a first embodiment of the present disclosure;
FIG. 3B is an enlarged view of a retro-reflection sheet of the imaging device according to the first embodiment of the present disclosure;
FIG. 3C is a schematic cross-sectional view of FIG. 3B taken along a line A-A;
FIG. 4 is a view illustrating an operation of the imaging device according to the first embodiment of the present disclosure;
FIG. 5 is a block diagram illustrating an electrical configuration of the imaging device according to the first embodiment of the present disclosure;
FIG. 6A is a perspective view illustrating an overall configuration of an imaging device according to a second embodiment of the present disclosure;
FIG. 6B is a view illustrating the essential parts of the imaging device according to the second embodiment of the present disclosure; and
FIG. 7 is a view illustrating a modified example of the second embodiment of the present disclosure.

An imaging device according to aspects of the present invention displays an aerial image by utilizing retro-reflection in a three-dimensional space, wherein wearing special glasses or the like is not involved. The imaging device has a function of changing an aerial image by using a light source such as an LED. It should be noted that the drawings referred to in the description of the following embodiments include exaggerated representations to facilitate understanding of the disclosure and do not represent the shape or scale of an actual product as is.

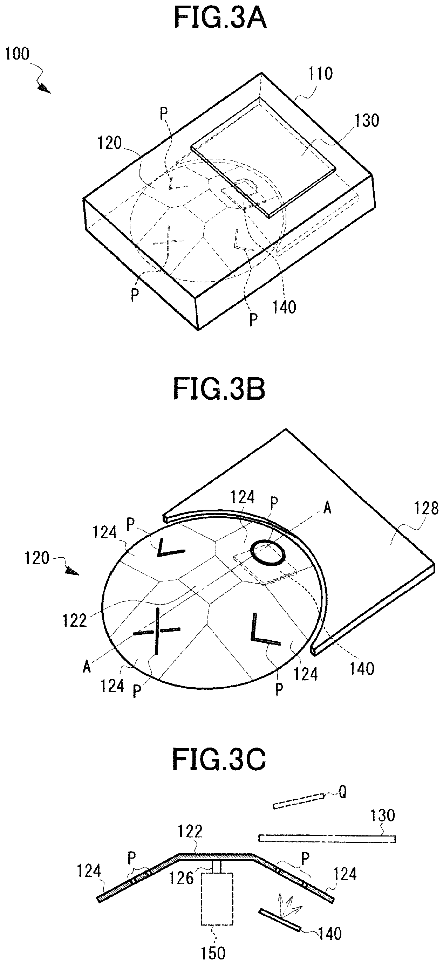

Next, a first embodiment of the present invention will be described in detail. FIGS. 3A to 3C are views illustrating an imaging device according to the first embodiment of the present disclosure. FIG. 3A is a perspective view illustrating the overall configuration of the imaging device, FIG. 3B is an enlarged view of a retro-reflection sheet, and FIG. 3C is a schematic cross-sectional view of FIG. 3B taken along a line A-A.

The imaging device 100 of the present embodiment includes, for example, a retro-reflection sheet 120, a beam splitter 130, an LED light source 140, a motor 150, a circuit board, and the like inside a rectangular housing 110, and is configured to display an aerial image Q above the beam splitter 130.

The retro-reflection sheet 120 is an optical member configured to reflect light in the same direction as that of incident light, and is constituted by, for example, a prismatic retro-reflection element such as a triangular pyramid-shaped retro-reflection element, a full cube corner-type retro-reflection element, or a bead-type retro-reflection element.

The shape of the retro-reflection sheet 120 is not particularly limited, yet the retro-reflection sheet 120 includes a disk-shaped base to which it is affixed. The retro-reflection sheet 120 includes a flat top surface 122 and a plurality of flat inclined surfaces 124 inclined with respect to the top surface 122, and has an approximately disk-like shape as a whole. A shaft 126 is provided on the back surface of the top surface 122, and the shaft 126 is connected to a rotary shaft of the motor 150. The retro-reflection sheet 120 is configured to rotate about the shaft 126 when the motor 150 is rotated. Further, in the vicinity of the peripheral edge of the retro-reflection sheet 120, another retro-reflection sheet 128 is provided as if it were a surface to which the retro-reflection sheet 120 is continuous. The another retro-reflection sheet 128 is fixed to the bottom of the housing 110. When an aerial image Q is displayed, the visibility and contrast of the aerial image Q are reduced if a region in which no retro-reflection surface is present exists within a region facing the beam splitter 130. Such a phenomenon is inhibited by the provision of the another retro-reflection sheet 128.

A design P constituted by a cutout or an opening is formed in each of the plurality of inclined surfaces 124. Here, the retro-reflection sheet 120 includes four inclined surfaces 124, and four designs P of different types are formed in these inclined surfaces 124, respectively. The design P represents, for example, an icon serving as a target to be operated by a user, and the design P forms an original image of the aerial image Q when irradiated by the LED light source 140.

The LED light source 140 is situated under the retro-reflection sheet 120. The LED light source 140 is fixed to the bottom of the housing 110 and configured to irradiate the retro-reflection sheet 120 from the back surface side. The LED light source 140 includes, for example, one or more LEDs, and emits light in a predetermined direction. When the LED light source 140 is a surface light source including a plurality of LEDs, the LED light source 140 is situated so as to be approximately parallel with the inclined surfaces 124, and preferably illuminates the entire back surface of one inclined surface 124 of the retro-reflection sheet 120 efficiently and uniformly. The LED light source 140 may use a laser diode in addition to a light-emitting diode.

The beam splitter 130 is situated above the retro-reflection sheet 120. The beam splitter 130 is an optical member configured to split incident light into light to be transmitted and light to be reflected at a certain ratio. The beam splitter 130 may be a half mirror.

The motor 150 is situated under the retro-reflection sheet 120 and is connected to the shaft 126 of the retro-reflection sheet 120 as described above. The motor 150 is configured to rotate the retro-reflection sheet 120, to thereby rotate an inclined surface 124, on which the design P is formed, and move the inclined surface 124 to an irradiation position at which the inclined surface 124 is irradiated by the LED light source 140. As described later, the motor 150 controls the rotation of the retro-reflection sheet 120 by using a controller.

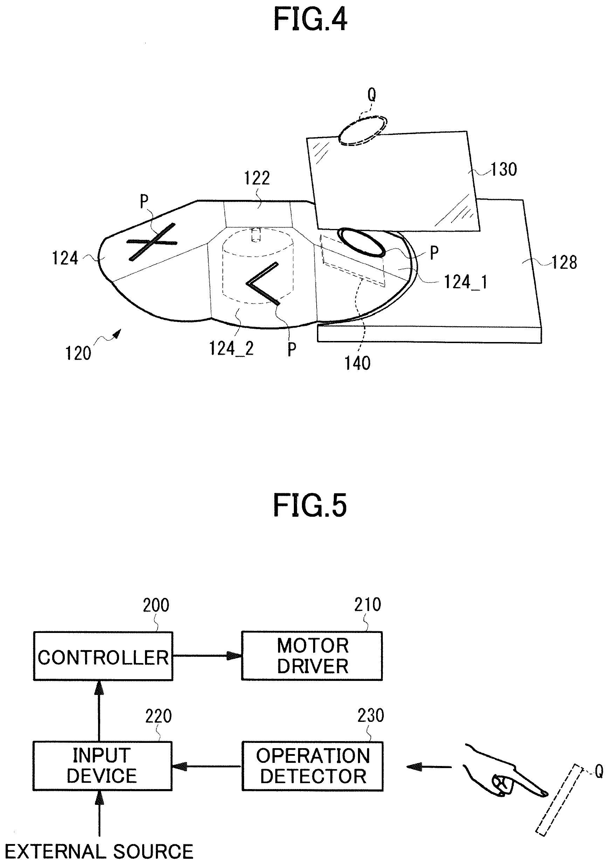

As illustrated in FIG. 4, when a given inclined surface 124_1 is rotated by the motor 150 to move to the irradiation position of the LED light source 140 (in the illustrated example, the design P representing O is rotated to move to the irradiation position), the LED light source 140 irradiates the inclined surface 124_1 from the back surface side, and the light with which the inclined surface 124_1 is irradiated passes or is transmitted through the cutout or opening that constitutes the design P, thereby generating an original image of the design P. The light transmitted through the design P is reflected on the beam splitter 130 and then retro-reflected on the retro-reflection sheet 120, and the reflected light is transmitted through the beam splitter 130 to display an aerial image Q of the design P. The aerial image Q is displayed at a position symmetrical to the design P with respect to the surface of the beam splitter 130.

Then, when the motor 150 rotates the retro-reflection sheet 120 to rotate the next inclined surface 124_2 to move to the irradiation position of the LED light source 140, an aerial image Q of the design P formed in the next inclined surface 124_2 is displayed, such that an aerial image is switched to another aerial image.

Thus, according to the present embodiment, by the retro-reflection sheet 120 being rotated, the design P to be irradiated by the LED light source 140, that is, an original image, can be switched, and an aerial image Q can be changed or switched accordingly. Moreover, since a display such as a liquid crystal display is not used as the light source, the overall size of the housing 110 can be reduced.

FIG. 5 is an example of a block diagram illustrating an electrical configuration of the imaging device according to the present embodiment. The imaging device 100 includes a controller 200 configured to control the rotation of the retro-reflection sheet 120, a motor driver 210 configured to drive the motor 150, an input device 220 configured to receive an instruction from an external source or a detection result from an operation detector 230 and provide it to the controller 200, and an operation detector 230 configured to detect presence or absence of a user's input operation into an aerial image Q. For example, the controller 200 is configured to rotate the retro-reflection sheet 120 to display an aerial image Q of a next design P when an input operation into an aerial image Q is detected by the operation detector 230, or is configured to rotate the retro-reflection sheet 120 in response to an instruction from an external source to display an aerial image Q of another design.

In the above embodiment, the retro-reflection sheet 120 is disk-shaped. This is an example, and the retro-reflection sheet 120 may have other shapes. Moreover, a design is formed in each of the four inclined surfaces, but the number of designs and the type of the design (letter, icon, and the like) may be desirably selected. In addition, a motor is used as a means for rotating the retro-reflection sheet, but a mechanism other than the motor may be used to rotate the retro-reflection sheet. Furthermore, the retro-reflection sheet may be moved not only in a rotating manner but also linearly.

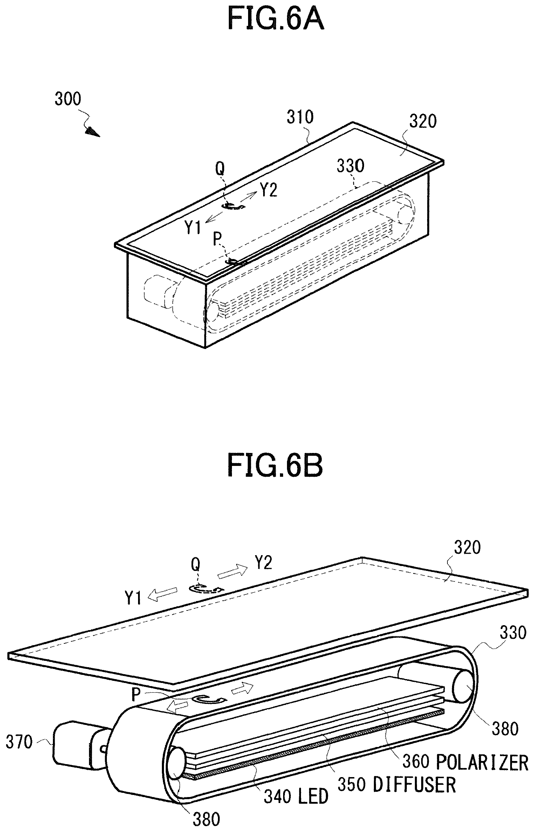

Next, a second embodiment of the present invention will be described. FIGS. 6 are views illustrating an imaging device according to the second embodiment. FIG. 6A is a perspective view illustrating the overall configuration of the imaging device, and FIG. 6B is a view illustrating the essential parts of the imaging device.

While the first embodiment illustrates an example of switching an aerial image to another aerial image by rotating the retro-reflection sheet, the second embodiment relates to a structure configured to add a movement to an aerial image. As illustrated in FIGS. 6, an imaging device 300 includes, for example, a belt-like retro-reflection sheet 330, an LED light source 340, a diffuser 350, a polarizer 360, a motor 370, and rotating pins 380 as illustrated in FIG. 6B in a rectangular housing 310, and includes a polarized beam splitter 320 that is attached to the surface of the housing 310. Thus, an aerial image Q is displayed at a fixed height from the polarized beam splitter 320, and when the retro-reflection sheet 330 is moved by the motor 370, the aerial image Q moves in the direction Y1 or Y2.

The retro-reflection sheet 330 is wound, for example, over a pair of rotating pins 380 and form an endless belt. The motor 370 is connected to one rotating pin 380, and the motor 370 drives the rotating pin 380 to rotate, to thereby move the retro-reflection sheet 330 in the direction Y1 or Y2. At least one design P is formed in the retro-reflection sheet 330. The design P is constituted by a cutout or an opening as in the first embodiment.

The LED light source 340, the diffuser 350 and the polarizer 360 are situated in the space between the upper part and the lower part of the retro-reflection sheet 330. The LED light source 340 is an approximately rectangle-shaped surface light source on which a plurality of LEDs are arranged two-dimensionally, and is situated between the pair of rotating pins 380 while having a fixed length.

The diffuser 350 is situated above the LED light source 340. The diffuser 350 is, for example, an optical element such as optical film or a diffusion sheet having an approximately rectangular shape. The diffuser 350 has, for example, approximately the same size as that of the LED light source 340, lets in light from the LED light source 340 from the bottom surface side, lets out the diffused light from the top surface side, and irradiates the polarizer 360 above itself with the light approximately uniformly.

The polarizer 360 is situated above the diffuser 350. The polarizer 360 is, for example, an optical element such as a polarizing filter or a Dual Brightness Enhancement Film (DBEF; reflective polarizing element), and transmits therethrough rays of light that are in a certain polarized state (for example, linearly polarized light) among the rays of the light from the diffuser 350. The polarized state of the polarizer 360 is determined with respect to the polarized state of the polarized beam splitter 320.

In the case of using the polarizer 360, for example, a λ/4 film may be provided as a retarder film on the surface of the retro-reflection sheet 330. The retarder film provides a phase difference between incident light and outgoing light. For example, the λ/4 film generates a phase difference of λ/4×2 (by reciprocation) between the incident light and the outgoing light.

The polarized beam splitter 320 is situated above the retro-reflection sheet 330. The polarized beam splitter 320 is an optical element that transmits therethrough a part of incident light and reflects another part of the incident light, and is a polarized light splitting element configured to split the incident light into a p-polarized component and a s-polarized component. For example, the polarized beam splitter 320 transmits therethrough a part of light in a certain polarized state and reflects another part thereof.

The light emitted from the LED light source 340 is diffused by the diffuser 350, is converted to light in a certain polarized state through the polarizer 360, and irradiates almost the entirety of the upper part of the retro-reflection sheet 330 from the back surface side. A design P is formed in the retro-reflection sheet 330. The light exiting the polarizer 360 passes through a cutout or an opening of the design P, the light having passed the cutout or the opening is reflected by the polarized beam splitter 320, the reflected light is retro-reflected by the retro-reflection sheet 330, the retro-reflected light is transmitted through the polarized beam splitter 320, and an aerial image Q of the design P is displayed. The aerial image Q is displayed at a position symmetrical to the design P with respect to the main surface of the polarized beam splitter 320.

When the motor 370 rotates the rotating pins 380, the retro-reflection sheet 330 moves in the direction Y1 or Y2, and the design P also moves in the horizontal direction. Since the design P is irradiated by the LED light source 340 while being moved horizontally, the aerial image Q is also moved in the direction Y1 or Y2.

Thus, according to the present embodiment, it is possible to add a movement to the aerial image by moving the retro-reflection sheet in which the design is formed. In addition, since a display such as a liquid crystal display is not used as the light source of the imaging device, it is possible to reduce the size of the imaging device. In the above embodiment, one design is presented on the retro-reflection sheet 330. However, this is nonlimiting. By forming a plurality of types of designs such as letters, icons, and the like (cutouts) in a belt-like retro-reflection sheet, and making the designs be irradiated or be not irradiated by the LED light source, it is possible to apply the technique to switching of aerial images.

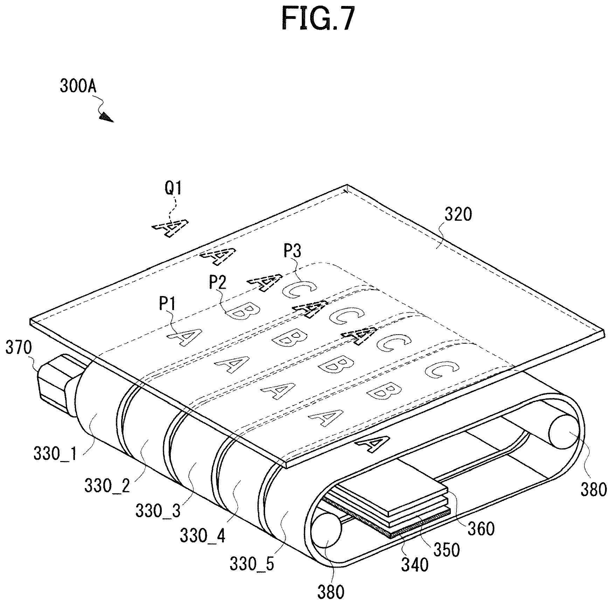

Next, a modified example of the second embodiment is illustrated in FIG. 7. In an imaging device 300A illustrated in FIG. 7, a plurality of belt-shaped retro-reflection sheets 330_1, 330_2, 330_3, 330_4, and 330_5 are situated in parallel, and an LED light source 340 is situated in a direction orthogonal to the conveying direction of the belts so as to overlap with the plurality of retro-reflection sheets simultaneously. In the illustrated example, designs P1, P2, and P3 (A, B, and C letter-shaped cutouts) are formed in each of the retro-reflection sheets 330_1 to 330_5, and the designs P1 of the retro-reflection sheets 330_1 to 330_5 coincide with the irradiation position of the LED light source 340 simultaneously. Thus, five aerial images Q1 corresponding to the five designs P1 are displayed above the polarized beam splitter 320.

Here, when the motor 370 rotates the rotating pins 380 to move the retro-reflection sheets 330_1 to 330_5 in the horizontal direction, and, as a result, for example, the designs P2 of the respective retro-reflection sheets come to coincide with the irradiation position of the LED light source 340, aerial images Q2 of the designs P2 are displayed, and the aerial images Q1 are switched to the aerial images Q2.

In the above example, the retro-reflection sheet 330_1 to 330_5 is simultaneously driven by the motor 370, but for example, a plurality of motors may be utilized to drive each retro-reflection sheet 330_1 to 330_5. Thus, one or more selected aerial images can be switched.

In the above example, the same designs P1, P2, and P3 are formed in the retro-reflection sheets 330_1 to 330_5. However, different designs may be formed in the respective retro-reflection sheets, and the designs may be icons, not only letters. Depending on the combination of designs formed in the retro-reflection sheets, various types of button displays and the like are possible.

In the above example, one design of each retro-reflection sheet coincides with the irradiation position of the LED light source 340. However, a plurality of designs of each retro-reflection sheet may coincide with the irradiation position of the LED light source 340. For example, the width of the LED light source 340 in the belt conveying direction may be increased, in order that the aerial images Q1 and Q2 of the designs P1 and P2 of each retro-reflection sheet may be displayed simultaneously. Furthermore, by situating the LED light source 340 to extend between the pair of rotating pins 380 as in the second embodiment illustrated in FIG. 6, it is possible to add a movement to the plurality of aerial images Q1 upon driving the motor 370. Further, in the configuration illustrated in FIG. 7, by reducing the distance between the pair of rotating pins 380 and reducing the length of the belt, it is possible to reduce the size of the imaging device 300A.

The imaging device according to the present embodiment can be applied to displaying of information of all types of devices and to user input, and can be applied to, for example, a computer device, a vehicle-mounted electronic device, an ATM of, for example, a bank, a ticket vendor of, for example, a station, an input button of an elevator, and the like.

Although the preferred embodiments of the present disclosure have been described in detail above, the present invention is not limited to the specific embodiments, and various modifications and changes can be made within the scope of the claims.

## Claims

1. An imaging device capable of displaying an aerial image by utilizing retro-reflection, the imaging device comprising:
a retro-reflection member in which a design including a cutout or an opening is formed;
a light source configured to irradiate the retro-reflection member from a back surface side;
an optical member that is situated above the retro-reflection member and through which retro-reflected light can be transmitted; and
a moving member configured to move the retro-reflection member,
wherein the imaging device is configured to cause a change in an aerial image of the design when the retro-reflection member is moved.

2. The imaging device according to claim 1,
wherein a plurality of designs are formed in the retro-reflection member, and
when the retro-reflection member is moved, the aerial image is switched to another aerial image.

3. The imaging device according to claim 1 or 2,
wherein when the retro-reflection member is moved, the design moves in response, moving the aerial image.

4. The imaging device according to one of claims 1 to 3,
wherein the retro-reflection member is installed such that the retro-reflection member is capable of rotating, and the moving member is configured to rotate the retro-reflection member, and
the aerial image of the design coinciding with a position irradiated by the light source is displayed.

5. The imaging device according to one of claims 1 to 4,
wherein the retro-reflection member includes a belt-like retro-reflection sheet that is wound over a pair of rotating members, and the moving member is configured to move the retro-reflection sheet in a horizontal direction, and
the aerial image of the design coinciding with a position irradiated by the light source is displayed.

6. The imaging device according to claim 5,
wherein a plurality of retro-reflection sheets are wound in parallel over the pair of rotating members, and
at least one design is formed in each of the plurality of retro-reflection sheets.

7. The imaging device according to claim 6,
wherein the moving member drives the plurality of retro-reflection sheets separately.

8. The imaging device according to one of claims 1 to 7, further comprising:
a diffuser between the light source and the retro-reflection member.

9. The imaging device according to claim 8, further comprising:
a polarizer between the light source and the retro-reflection member.
